# EUROPEAN PATENT APPLICATION

(11) **EP 4 015 490 A1**
(43) Date of publication of application: **22.06.2022**
(21) Application number: 20216181.6
(22) Date of filing: 21.12.2020
(51) Int. Cl.: C05B 7/00, C05C 1/02, C05G 3/30, C05G 3/90

(54) **METHOD FOR THE MANUFACTURE OF AN AMMONIUM-BASED COMPOSITION COMPRISING AN AMMONIUM SALT AND AN ADDITIVE**

(71) Applicant: Yara International ASA, 0277 Oslo (NO)
(72) Inventor: van Belzen, Ruud, NL-4541 HJ Sluiskil Terneuzen (NL); Colpaert, Filip, B-9052 Zwijnaarde (BE); van Elslande, Paul, NL-4541 HJ Sluiskil Terneuzen (NL)
(74) Representative: De Clercq & Partners

(57) **Abstract**

A method is disclosed for the manufacture of a homogeneous, solid, particulate, ammonium-based composition comprising an ammonium source and an additive in a ammonium production plant comprising at least an evaporator unit, a mixing unit, a particulation unit, an effluent gas treatment unit and a scrubber solution storage container, wherein the method comprises at least the steps of : (i) in the evaporator unit, concentrating a melt comprising an ammonium salt and water to a melt comprising an ammonium salt and 1 to 5 weight% of water; (ii) optionally, in the mixing unit, mixing the melt comprising an ammonium salt and 1 to 5 weight% of water obtained in step (i) with other components to produce an ammonium-based melt; (iii) in the particulation unit, particulating the melt obtained in step (i) or (ii), thereby obtaining the homogeneous, solid, particulate, ammonium-based composition; (iv) in the effluent gas treatment unit, treating the effluent gas from the particulation unit comprising ammonia gas with an aqueous solution to produce a scrubber solution; (v) in the scrubber solution storage container, storing the scrubber solution from the effluent gas treatment unit; and (vi) optionally, in the scrubber evaporator, concentrating the scrubber solution from the scrubber solution storage container, after which the concentrated scrubber solution is mixed with the melt comprising an ammonium salt and water or added to the melt in the mixing unit of step (ii); wherein the additive is introduced as an aqueous suspension, an aqueous dispersion, or an aqueous solution, in any one or more of : (a) the melt comprising an ammonium salt and water before the evaporation unit; (b) the melt comprising an ammonium salt and 1 to 5 weight% of water in the mixing unit; (c) the effluent gas treatment unit; (d) the scrubber solution storage container containing the scrubber solution.

## Description

### FIELD OF THE INVENTION

This invention relates to a method for the manufacture of an homogeneous, solid, particulate, ammonium-based composition comprising an ammonium salt and an additive, in particular a nitrification inhibitor for reducing the loss of nitrogen through leaching and denitrification, and stabilizers that may improve the stability of the nitrification inhibitor.

### BACKGROUND OF THE INVENTION

Nitrogen is a basic element for any living system as a constituent of protein. Soils contain nitrogen naturally, mostly in the form of nitrate (NO₃⁻), that crops can absorb to fuel their growth. However, the nitrogen content of soils is usually too low to ensure an optimal growth and yield, so farmers often supply additional nitrogen to crops in the form of fertilizer compositions. Nitrogen can be supplied in three main forms: urea, which cannot be absorbed directly by the crops, but needs to be decomposed by soil organisms, nitrate ions (NO₃⁻), which can be directly absorbed by the roots of crops, and ammonium ions (NH₄⁺). Ammonium may be absorbed directly by roots although at a much lower rate than nitrate ions. Ammonium groups may also be oxidized to nitrate in a two-stage process called nitrification: first, ammonium is converted to nitrite (NO₂⁻), and nitrite is converted to nitrate. This conversion is carried out by nitrifying organisms, for example *Nitrosomas* bacteria can perform the first step, and *Nitrobacter* the second step.

Ammonium ions are positively charged and therefore are easily fixed by negatively charged materials, such as clays, which are abundantly present in soils. It is said that ammonium ions have a low mobility in soils. On the other hand, negatively charged nitrate ions are not so well retained by soil components, and may leach from the soil, in particular in case of important precipitations.

When applying ammonium-based fertilizers to soils, there is a need a to regulate the conversion of ammonium into nitrate to avoid nitrogen losses due to nitrate leaching and avoid nitrous oxide (emissions). Compounds that slow down the nitrification process, so-called nitrification inhibitors, have been developed and may be applied to soils at the same time as ammonium-based fertilizers. Alternatively, the nitrification inhibitors may be added directly to the fertilizer composition.

There are a limited number of compounds recognized commercially as nitrification inhibitors. Examples of nitrification inhibitors include, but are not limited to, dicyandiamide (DCD), 2-chloro-6-trichloromethylpyridine (nitrapyrin), dimethylpyrazole (DMP)-based compounds, such as 3,4-dimethylpyrazole phosphate (DMPP), 3,4-dimethylpyrazole-succinic acid (DMPSA), 3-methylpyrazole (MP); 1-H-1,2,4-triazole (TZ); 3-methylpyrazole-1-carboxamide (CMP); 4-amino-1,2,4-triazole (AT, ATC); 3-amino-1,2,4-triazole; 2-cyanimino-4-hydroxy-6-methylpyrimidine (CP); 2-ethylpyridine; ammonium thiosulfate (ATS); sodium thiosulfate (ST); thiophosphoryl triamide; thiourea (TU); guanylthiourea (GTU); ammonium polycarboxylate; ethylene urea; hydroquinone; phenylacetylene; phenylphosphoro diamidate; neemcake; calcium carbide; 5-ethoxy-3-trichloromethyl-1,2,4-thiadiazol (etridiazol; terraole); 2-amino-4-chloro-6-methylpyrimidine (AM); 1-mercapto-1,2,4-triazole (MT); 2-mercaptobenzothiazole (MBT); 2-sulfanilamidothiazole (ST); 5-amino-1,2,4-thiadiazole; 2,4-diamino-6-trichloromethyl-s-triazine (CL-1580); N-2,5-dichlorophenyl succinanilic acid (DCS); nitroaniline, and chloroaniline.

Some documents provide methods to combine a nitrification inhibitor with a particulate composition: for example, US4,582,524 (Lobitz, 1986) discloses the addition of solid DCD to a melt comprising ammonium sulphate and ammonium nitrate. However, using a solid often leads to additional dust formation, which is an issue in industrial plant that is carefully monitored. US 5,352,265 (Weston et al., 1994) discloses a process for the incorporation of NBTPT and dicyandiamide (DCD) into a homogeneous fertilizer composition by blending a concentrated solution of NBTPT in a solvent, selected from the group consisting of liquid amides, 2-pyrrolidone, and N-alkyl-2-pyrrolidones directly into the molten urea prior to its granulation ; the DCD may be added to the urea melt as a solid or in dissolved form along with the NBTPT. However, it may be desirable to avoid the use of an organic solvent since these may present their own challenges, such as toxicity, cost, and/or contamination of production processes.

There is a need to provide a safer method to add nitrification inhibitors to solid, particulate ammonium-based compositions.

### SUMMMARY OF THE INVENTION

There is a need to add a precise dose of an additive, in particular, a nitrification inhibitor, or a stabilizer for this inhibitor, to an ammonium-based composition when produced in a typical fertilizer production plant.

The inventors have now addressed the abovementioned problems, and found that an additive, such as one selected from the group of a nitrification inhibitor, and an acidic organic or inorganic compound, can be added to an ammonium-based melt in a precise dose using different addition points in the process for the production of ammonium-based fertilizer composition, wherein the additive is introduced into the ammonium-based composition as an aqueous suspension of particulate solid material, as an aqueous solution of the additive, or as an aqueous dispersion of the additive.

The use of water as a suspension, solvent or dispersion medium, and the addition of water to a melt that already contains water, does not impact the quality of the final solid, particulate composition. Moreover, the process for the production of ammonium-based composition already contains process steps and measures to remove water from a melt, thus effectively removing the solvent, suspension or dispersion medium (i.e. water). Hence, no alien substances other than the intended additives remain in the final ammonium-based product.

In one aspect, the present disclosure relates to a method for the manufacture of a homogeneous, solid, particulate, ammonium-based composition comprising an ammonium salt and an additive in a production plant comprising an evaporator unit, a particulation unit, optionally an effluent gas treatment unit comprising a scrubber, and a scrubber solution storage container, optionally a scrubber evaporator, and optionally a mixing unit, wherein the method comprises the steps of :
(i) in the evaporator unit, concentrating a melt comprising an ammonium salt and water to a melt comprising 1 to 5 weight% of water;
(ii) optionally, in the mixing unit, mixing the melt comprising an ammonium salt and 1 to 5 weight% of water with other components to produce an ammonium-based melt;
(iii) in the particulation unit, particulating the melt obtained in step (i) or (ii), thereby obtaining the homogeneous, solid, particulate, ammonium-based composition;
(iv) optionally, in the effluent gas treatment unit, treating the effluent gas from the particulation unit comprising ammonia gas with water to produce a scrubber solution;
(v) optionally, in the scrubber solution storage container, storing the scrubber solution from the gas treatment unit; and
(vi) optionally, in the scrubber evaporator, concentrating the scrubber solution from the scrubber solution storage container, after which the concentrated scrubber solution is mixed with the melt comprising an ammonium salt and water or added to the melt in the mixing unit of step (ii);
wherein the additive is introduced into the ammonium-based composition as an aqueous suspension, an aqueous dispersion, or an aqueous solution, by adding the additive to any one or more of :
(a) the melt comprising an ammonium salt and water before the evaporation unit;
(b) the melt comprising an ammonium melt and 1 to 5 weight% of water in the mixing unit;
(c) the effluent gas treatment unit;
(d) the scrubber solution storage container containing the scrubber solution.

### Figures

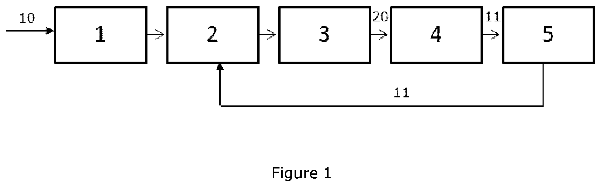

Figure 1 represents the workflow of a method according to the present disclosure.

### DETAILED DESCRIPTION OF THE INVENTION

Within the context of this disclosure, the expression "weight percent", "%wt" or "weight%", here and throughout the description unless otherwise defined, refers to the relative weight of the respective component based on the overall weight of the formulation.

Within the context of this disclosure, with a particulate form is meant a physical form that can also be designated as granulated, prilled, crystalline, compacted, powdered, and the like, wherein the respective compound is in a small unit form.

Within the context of this disclosure, with stabilizer is meant a compound which is able to improve the chemical stability of the nitrification inhibitor.

Within the context of this disclosure, with aqueous suspension is meant any composition wherein the additive is at least suspended as a particulate solid in water. Examples are calcium oxide in water or magnesium sulphate in water. The suspension may contain suspension stabilizers, wetting agents, surface-active compounds and the like.

Within the context of this disclosure, with aqueous dispersion is meant any composition wherein the additive is an at least partly water-immiscible liquid that is intimately mixed with water, wherein either the water or the at least partly water-immiscible liquid is the continuous phase.

Within the context of this disclosure, with aqueous solution is meant any composition wherein the additive is substantially dissolved in water. The aqueous solution may comprise other components, such as co-solvents to improve the solubility of the additive.

Within the context of this disclosure, a solid, homogeneous particle refers to a solid particle that is uniform with respect to its composition throughout the particle. An homogeneous particle may still comprise solid particles of its different components as long as the solid particles are considerably smaller than the homogeneous solid particles. In contrast, a heterogeneous particle varies in its composition throughout the particle. Notably, homogeneous particles are easier to produce because they require a single solidification step.

In one aspect, the present disclosure relates to a method for the manufacture of a homogeneous, solid, particulate, ammonium-based composition comprising an ammonium salt and an additive in a production plant comprising an evaporator unit, a particulation unit, optionally an effluent gas treatment unit comprising a scrubber, and a scrubber solution storage container, optionally a scrubber evaporator, and optionally a mixing unit, wherein the method comprises the steps of :
(i) in the evaporator unit, concentrating a melt comprising an ammonium salt and water to a melt comprising 1 to 5 weight% of water;
(ii) optionally, in the mixing unit, mixing the melt comprising an ammonium salt and 1 to 5 weight% of water with other components to produce an ammonium-based melt;
(iii) in the particulation unit, particulating the melt obtained in step (i) or (ii), thereby obtaining the homogeneous, solid, particulate, ammonium-based composition;
(iv) optionally, in the effluent gas treatment unit, treating the effluent gas from the particulation unit comprising ammonia gas with water to produce a scrubber solution;
(v) optionally, in the scrubber solution storage container, storing the scrubber solution from the gas treatment unit; and
(vi) optionally, in the scrubber evaporator, concentrating the scrubber solution from the scrubber solution storage container, after which the concentrated scrubber solution is mixed with the melt comprising an ammonium salt and water or added to the melt in the mixing unit of step (ii).

The above features (i), and (iii), are common to a standard ammonium-based fertilizer production plant.

First, a melt comprising an ammonium salt is produced. There are different methods known in the field to prepare such a melt, one of the most common method is to react a stream of ammonia, gaseous or liquid, with an acid, such as nitric acid, phosphoric acid, or sulphuric acid. This reaction produces a melt composition comprising an ammonium melt and water, in particular often comprising at least 20 weight% of water.

In one embodiment, the melt composition used in step a) comprises at least 5 weight% of water. In one embodiment, the melt composition used in step a) comprises 5 to 50 weight%, such as 10 to 50, 15 to 50, 20 to 50, 10 to 40, 15 to 40 weight%, of water. The melt must be concentrated in an evaporator unit to remove the excess water. The evaporator unit may comprise one or more apparatus, for example an evaporator or a heat exchanger, designed to heat up a composition and remove water from it. In the evaporator unit, the water content of the melt is brought down to 1.0 to 5.0 weight%. The exact water content of the melt after the evaporator unit is dictated by the particulating method chosen for the process. Different particulation methods tolerate melts with different water contents.

Later, additional components may be added to the melt. This addition may be performed in a mixing unit, where the additional components are added to the melt and mixed to obtain an homogeneous melt. The additional components may be soluble or not in the melt. An homogeneous melt is not limited to a melt only comprising soluble components, but a melt comprising insoluble components well distributed within the melt is considered homogeneous within this disclosure. For example, to produce an ammonium nitrate-based solid, particulate composition for fertilizer use, it is well known to add an inorganic filler to reduce the explosive risk of the solid, particulate composition. The inorganic filler may be selected from the group of limestone, dolomite, gypsum, kaolin clays or mixtures thereof.

Once the ammonium-based melt comprise all the required components, it is sent to the particulation unit to turn the melt into a homogeneous, solid, particulate composition. A variety of particulating methods are known in the field, and produce particles with different properties. The choice of particulating method may be dictated by the product requirements or type of melt. The particulation unit may comprise a fluidized bed, a pan granulator, a drum granulator, a prilling tower, a spherodizer, a pugmill or a pastillizer.

The particulating unit may also comprise a cooling unit. Particles formed from a melt have a high temperature, often above 60 °C. To facilitate its handling and storage, it may be an advantage to cool down the particles a little bit, for example below 40 °C. This if often done by introducing a stream of gas, for example air, into a compartment containing the hot particles.

The particulating unit requires the use of a stream of gas, often a stream of air, to cool the melt and help form the solid particles. In the particulating unit, the stream of gas becomes polluted with contaminants, solid or fluid, in particular ammonia gas. In most countries, this gas stream cannot be released in the atmosphere before the contaminants are removed from it, or at least the level of the contaminants must be below a certain threshold. So, the production plant may comprise an effluent gas treatment unit to remove at least some pollutants from the gas stream before it is released in the atmosphere. The most common apparatus in such a unit is a scrubber. A scrubber is a device comprising an air inlet and air outlet for the gas stream from the particulating unit to be injected and collected. It also comprises devices to capture contaminants from the gas stream. A common devices in scrubber are scrubbing pads on which a liquid composition, for example an aqueous solution is sprayed onto. The contaminants, solid or fluid, are absorbed by the water, which is collected onto the pads. The liquid composition from all the pads is collected into a single stream to form a scrubber solution. This scrubber solution may be stored in a scrubber solution storage unit.

Since the scrubber solution comprise elements from the product to be made, such as ammonia, it may be interesting to re-inject this solution back into the production process to save raw materials. The scrubber solution may be re-injected as it is collected from the pads, but it may also be concentrated, for example in a scrubber evaporator, to increase the concentration of the useful components and avoid re-injecting too much water, which will have to be evaporated eventually, in the production process. However, since the production process already contain stages where a composition is heated up to remove water, such as the evaporator of step (i), it may not be necessary to install a second evaporator in the process.

Once the desired scrubber solution is obtained, concentrated or not, it may be added in the production process, upstream, i.e. before, of the particulation stage. For example, the scrubber solution may be added to the melt before it enters the evaporator unit of step (i), or may be added in the mixing unit of step (ii).

In one embodiment, the method is performed in a production plant comprising an evaporator unit, and a particulation unit.

In one embodiment, the method is performed in a production plant comprising an evaporator unit, a mixing unit, and a particulation unit.

In one embodiment, the method is performed in a production plant comprising an evaporator unit, a mixing unit, a particulation unit, and an effluent gas treatment unit comprising a scrubber, and a scrubber solution storage container.

In one embodiment, the method is performed in a production plant comprising an evaporator unit, a particulation unit, and an effluent gas treatment unit comprising a scrubber, and a scrubber solution storage container.

In one embodiment, the method is performed in a production plant comprising an evaporator unit, a mixing unit, a particulation unit, and an effluent gas treatment unit comprising a scrubber, a scrubber solution storage container, and a scrubber evaporator.According to the present disclosure, the additive is suitably introduced into the manufacturing process of the ammonium-based composition as an aqueous suspension, an aqueous dispersion, or an aqueous solution by adding the additive to any one or more of :
(a) the melt comprising an ammonium salt and water before the evaporation unit;
(b) the melt comprising an ammonium melt and 1 to 5 weight% of water in the mixing unit;
(c) the effluent gas treatment unit;
(d) the scrubber solution storage container containing the scrubber solution.

In one embodiment, the additive is suitably introduced into the manufacturing process of the ammonium-based composition as an aqueous suspension, an aqueous dispersion, or an aqueous solution by adding the additive to the concentrated scrubber solution produced by the scrubber evaporator.

According to one embodiment of the present disclosure, the particulation unit is selected from the group of fluidized bed, pan granulator, drum granulator, prilling tower, spherodizer, pugmill and pastillizer. Each of these particulation units starts from a melt and granulates said melt into a homogeneous, solid, particulate composition, either by action of accretion (fluidized bed) or agglomeration.

In one embodiment, the additive is one or more component selected from the group of a nitrification inhibitor, and an acidic organic or inorganic compound. Nitrification inhibitors are important additives for ammonium-based fertilizer products as they reduce the conversion rate of ammonium ions to nitrate ions, thereby reducing the risk of nitrate leaching in soils and the formation of nitrous oxide, a gas with an important greenhouse effect. However, it has been observed that the stability of these inhibitors in solid, ammonium-based compositions is not always very good, and a stabilizer may be added to the ammonium-based composition to increase the lifetime of the nitrification inhibitor. In the case of 3,4-dimethyl pyrazole phosphate (DMPP), it has been observed that the presence of an acidic organic or inorganic compound improved its stability in solid, ammonium-based compositions.

In principle, the additive is suitably introduced into the ammonium-based composition as an aqueous suspension, an aqueous dispersion, or an aqueous solution. However, depending on the specific equipment, one or more of the above may be preferred.

According to one embodiment of the present disclosure, according to option a), the additive is added as an aqueous solution or aqueous suspension to the melt comprising an ammonium salt and water, before the evaporation unit. Using option a), the water is removed by the evaporation unit shortly after its addition thereof to the melt.

According to one embodiment of the present disclosure, according to option b), the additive is added as an aqueous solution or an aqueous suspension to a melt comprising an ammonium salt and 1.0 to 5.0 weight% of water, in the mixing unit. The mixing unit is an optimal location as the mixing unit comprises addition and mixing means that are designed to mix in additives or other compounds into the ammonium-based melt. Using option b), the water with the additive may be removed by evaporation due to the high temperature of the melt, but it may also not be removed entirely before the granulation step. If the concentration of the aqueous solution or suspension of the additive is high, then the amount of water added to the melt does not affect the process and the solid, particulate composition has similar properties than composition obtained without the additive.

According to one embodiment of the present disclosure, according to option c), the additive is added as an aqueous solution or an aqueous suspension to the effluent gas treatment unit, in particular to the water that is used in the gas treatment unit for treating the effluent gas from the particulation unit comprising ammonia gas to produce a scrubber solution. Surprisingly, it was found very easy and efficient to add the additive as an aqueous suspension to the water supply used in the effluent gas treatment unit. The additive may be added to a tank storing the water used in the scrubber. Alternatively, it may be added directly to the stream of water before it enters the scrubber via means known in the field. According to this option, the water supply acts as an entry point for the additive. The additive is subsequently transported within the scrubber solution to the scrubber solution storage container.

According to one embodiment of the present disclosure, according to option d), the additive can also be added as an aqueous suspension to the scrubber solution storage container containing the scrubber solution. The scrubber solution may be transported to the scrubber evaporator, where the bulk of the water is removed, or it may be directly introduced into the production process. The scrubber solution, concentrated or not, may be added to the evaporation unit where it mixes with the melt and the water is evaporated. This allows the process to control effectively the water content of the melt to be particulated. Alternatively, the scrubber solution may be added to the mixing unit where it is mixed in with the highly concentrated ammonium-based melt.

The selection of the method of addition of an additive, i.e. as an aqueous suspension, solution or dispersion, may depend on the identity of the additive. Some may be easily dissolved in water and, as such, may be added to the method as an aqueous solution. Other additives with a poor water solubility may have to be added as a suspension or dispersion.

Similarly, the step wherein the additive is added may be guided or imposed by different factors, such as the exact nature of the additive, its stability towards temperature and/or some chemical environment.

### Additives

According to one embodiment of the present disclosure, the additive is one or more, selected from the group of a nitrification inhibitor, and an acidic organic or inorganic compound.

According to one embodiment of the present disclosure, the nitrification inhibitor is selected from the group of dicyandiamide (DCD), 2-chloro-6-trichloromethylpyridine (nitrapyrin), dimethylpyrazole (DMP)-based compounds, such as 3,4-dimethylpyrazole phosphate (DMPP), 3,4-dimethylpyrazole-succinic acid (DMPSA), 4,5-dimethylpyrazole-succinic acid, 3-methylpyrazole (MP); 1-H-1,2,4-triazole (TZ); 3-methylpyrazole-1-carboxamide (CMP); 4-amino-1,2,4-triazole (AT, ATC); 3-amino-1,2,4-triazole; 2-cyanimino-4-hydroxy-6- methylpyrimidine (CP); 2-ethylpyridine; ammonium thiosulfate (ATS); sodium thiosulfate (ST); thiophosphoryl triamide; thiourea (TU); guanylthiourea (GTU); ammonium polycarboxylate; ethylene urea; hydroquinone; phenylacetylene; phenylphosphoro diamidate; neemcake; calcium carbide; 5-ethoxy-3-trichloromethyl-1,2,4-thiadiazol (etridiazol; terraole); 2-amino-4-chloro-6-methylpyrimidine (AM); 1-mercapto-1,2,4-triazole (MT); 2-mercaptobenzothiazole (MBT); 2-sulfanilamidothiazole (ST); 5-amino-1,2,4-thiadiazole; 2,4-diamino-6-trichloromethyl-s-triazine (CL-1580); N-2,5-dichlorophenyl succinanilic acid (DCS); nitroaniline, chloroaniline, and derivatives and salts thereof. These compounds have been described in the literature as reducing the rate of nitrification of ammonium ions into nitrate ions.

In order to be effective, the nitrification inhibitor is added to the ammonium-based composition at a level of 0.0001 to 1.0% weight%, in particular 0.02 to 0.5% weight%, more in particular 0.05 to 0.3 weight%, relative to the total weight of the ammonium-based composition. It may not be necessary to use a large amount, i.e. above 1.0 weight% based on the total weight of the composition, of the nitrification inhibitor as the agronomical effect. A high amount may increase the cost of the final product too much to be commercially interesting, and might not give a noticeable improvement compared to a lower amount. Further, some of these compounds may be toxic, and/or difficult to handle, so it may be an advantage to limit the amount of the inhibitor.

In one embodiment, the acidic organic or inorganic compound is an organic compound comprising a carboxylic group, in particular wherein the acidic organic or inorganic compound is citric acid. It may be an advantage to add another compound in addition to the nitrification inhibitor to the ammonium-based composition. Nitrification inhibitors are small organic molecules which may have a limited lifetime when added to ammonium-based, solid compositions. Inhibitors may react with the other components present in the composition or simply with ambient light, or ambient moisture and degrade. Therefore, it may be an advantage to add a component to the ammonium-based composition that can extend the lifetime of the inhibitor during storage and transport. Different nitrification inhibitors may require different types of stabilizers according to the knowledge in the field.

For DMPP, and DMP-based compounds in general, it was found that acidic compounds, in particular organic compounds comprising a carboxylic acid, were suitable at preventing the degradation of the inhibitor in ammonium-based composition. For example, citric acid was found to increase the stability of DMPP during storage.

In one embodiment, the acidic organic or inorganic compound is present in the homogeneous, solid, particulate ammonium-based composition at a level of 0.0001 to 1.0 weight%, in particular 0.02 to 0.5 weight%, more in particular 0.05 to 0.3 weight%, relative to the total weight of the composition.

In one embodiment, the additive comprises a DMP-based compound and an acidic organic compound.

In one embodiment, the additive comprises DMPP and an acidic organic compound.

In one embodiment, the additive comprises DMPP and citric acid.

In one embodiment, the additive comprising DMPP and citric acid, is added as an aqueous solution in step (i).

In one embodiment, the additive comprising DMPP and citric acid, is added as an aqueous solution in step (ii).

In one embodiment, the additive comprising DMPP and citric acid, is added as an aqueous solution in step (iii).

In one embodiment, the additive comprising DMPP and citric acid, is added as an aqueous solution in step (iv).

In one embodiment, the additive comprising DMPP and citric acid, is added as an aqueous solution in step (v).

In one embodiment, the additive comprising DMPP and citric acid, is added as an aqueous solution in step (vi).

In one embodiment, the additive is a compound that improves the chemical and/or physical properties of the solid, particulate, ammonium-based composition. These additives are well known in the field, and may be used to obtain a solid composition with improved properties. Fertilizer particles are often stored for extended period of times, from a few weeks to several months, and transported across continents. Particles must satisfy several criteria, in particular particle strength, moisture absorption, and dust formation. It may be necessary to add additives to the production process to ensure that these criteria are met. For example, for compositions comprising ammonium nitrate, magnesium nitrate or aluminum sulphate may be added to the melt to improve the strength of the particles.

In one embodiment, at least two additives are added to the ammonium-based melt in two separate steps. For example, a nitrification inhibitor may be added as an aqueous solution in step (i), and an organic or inorganic compound may be added as an aqueous solution in step (iii).

In one embodiment, the method comprises the further step of applying a conditioning agent to the homogeneous, solid, particulate, ammonium-based composition. The conditioning agent may be applied as a coating layer, in particular a coating layer comprising a wax, in particular a petroleum wax or a paraffin wax, and an alkyl phosphate ester. It is well known to apply a conditioning agent, for example, in the form of a coating layer, to solid, particulate compositions, to further improve their properties. Hygroscopicity, dustiness are characteristics that may be improved by the addition of such agents. For example, ammonium nitrate-based composition are quite hydroscopic, so it may be an advantage to apply a coating layer that is able to slow down the ate of water absorption by the composition. In particular, it was found that a coating layer comprising a wax, in particular a petroleum wax or a paraffin wax, and an alkyl phosphate ester was beneficial to ammonium nitrate-based compositions.

In one embodiment, the solid, particulate, ammonium-based composition comprises from 40 to 80 weight% of ammonium nitrate.

In one embodiment, the solid, particulate, ammonium-based composition comprises from 40 to 80 weight% of ammonium phosphate.

In one embodiment, the solid, particulate, ammonium-based composition comprises from 40 to 80 weight% of ammonium sulphate.

Ammonium salts are widely used in agriculture. Common ammonium salts are ammonium nitrate, ammonium phosphate and ammonium sulphate. Ammonium nitrate (NH₄NO₃) is a compound with a high nitrogen content, which supplies nitrogen to crops in two forms: nitrate, which can be absorbed quickly by the crop, and can be considered a fast-action fertilizer, and ammonium which needs to be oxidized to nitrate, and can be considered a slow-action fertilizer. Ammonium phosphate salts, which may comprise mono-ammonium phosphate (NH₄H₂PO₄) and/or di-ammonium phosphate ((NH₄)₂H₂PO₄), comprise two primary nutrients for crops, nitrogen and phosphorus. Ammonium sulphate salts, which may comprise ammonium sulphate ((NH₄)₂SO₄) and/or ammonium bisulphate ((NH₄)HSO₄), also comprise two nutrients required by crops, nitrogen and sulphur).

The solid, particulate composition, may comprise more than one ammonium salt. For example, it may comprise a mixture of ammonium nitrate and ammonium phosphate.

According to one embodiment of the present disclosure, the solid, particulate, ammonium-based composition further comprises one or more compounds selected from the group of calcium nitrate, sodium nitrate, ammonium sulphate nitrate, calcium bis(dihydrogen- orthophosphate), super phosphate, triple superphosphate, rock phosphate, potassium sulphate, potassium magnesium sulphate, potassium chloride (MOP), urea, urea potassium salts (UK), elemental sulphur, or mixtures thereof. Any of these compounds added to ammonium produces the ammonium-based fertilizer. These compounds are particularly added to the ammonium-based melt in the mixing unit, mentioned in step (ii) or equivalent.

In particular, to serve as a fertilizer, the average particle size (dp50) of the solid, particulate, ammonium-based composition is between 1.0 mm and 5 cm, preferably between 1.0 mm and 1 cm, preferably between 1.0 and 6.0 mm, preferably between 2.0 and 4.0 mm, preferably between 3.0 and 5.0 mm, preferably between 2.5 and 3.6 mm, as determined by mesh sieve screening.

The solid, particulate, ammonium-based composition may contain elemental sulphur, may be coated with micronutrients or other nutrients, or may be treated in any other way. It may contain any other processing additive, such as granulation additive.

An embodiment of the method according to the present disclosure is disclosed in figure 1. The box **1** represents the evaporator unit. A melt composition **10** comprising an ammonium salt, for example ammonium nitrate, is directed to the evaporator unit **1.** The water in the melt composition **10** is adjusted to about 5 weight%. The melt is then directed to a mixing unit **2** where the solution **11** from the scrubber solution storage container **5** is added to the melt and mixed for 5 to 20 min. The melt is then directed to the particulation unit **3,** for example a fluidized bed granulator where the melt is transformed into a solid, particulate ammonium-based composition. The granulator **3** produces a stream of polluted air **20** that is directed to a scrubber **4.**The scrubber **4** produces a scrubber solution **11** comprising an ammonium salt, for example ammonium nitrate, that is directed to the scrubber solution storage **5.**

### EXAMPLES

The following examples are included to demonstrate certain embodiments of the invention. It should be appreciated by the skilled person that the techniques disclosed in the examples represent techniques discovered by the inventors to function well in the practice of the invention. The skilled person should, however, in light of the present disclosure, appreciate that many changes can be made in the specific embodiments that are disclosed and still obtain a like or similar result without departing from the spirit and scope of the invention, therefore all matter set forth is to be interpreted as illustrative and not in a limiting sense.

### Example 1

400 g of NPK particles is heated up to 160 °C to obtain a melt. An aqueous solution containing 270 mg of DMPP is added to the melt, which is stirred at 160 °C for 10 min. The melt is poured onto a metal tray and left to cool. The solid material is broken into smaller pieces. Analysis of the solid composition by HPLC revealed a content of 672 ppm of DMPP.

## Claims

1. A method for the manufacture of a homogeneous, solid, particulate, ammonium-based composition comprising an ammonium salt and an additive in a production plant comprising at least an evaporator unit, a particulation unit, optionally an effluent gas treatment unit comprising a scrubber, and a scrubber solution storage container, optionally a scrubber evaporator, and optionally a mixing unit, wherein the method comprises at least the steps of :
(i) in the evaporator unit, concentrating a melt comprising an ammonium salt and water to a melt comprising an ammonium salt and 1 to 5 weight% of water;
(ii) optionally, in the mixing unit, mixing the melt comprising an ammonium salt and 1 to 5 weight% of water obtained in step (i) with other components to produce an ammonium-based melt;
(iii) in the particulation unit, particulating the melt obtained in step (i) or (ii), thereby obtaining the homogeneous, solid, particulate, ammonium-based composition;
(iv) optionally, in the effluent gas treatment unit, treating the effluent gas from the particulation unit comprising ammonia gas with an aqueous solution to produce a scrubber solution;
(v) optionally, in the scrubber solution storage container, storing the scrubber solution from the effluent gas treatment unit produced in step (iv); and
(vi) optionally, in the scrubber evaporator, concentrating the scrubber solution from the scrubber solution storage container, after which the concentrated scrubber solution is mixed with the melt comprising an ammonium salt and water or added to the melt in the mixing unit of step (ii);
**characterized in that** the additive is introduced as an aqueous suspension, an aqueous dispersion, or an aqueous solution, in any one or more of :
(a) the melt comprising an ammonium salt and water before the evaporation unit;
(b) the melt comprising an ammonium salt and 1 to 5 weight% of water in the mixing unit;
(c) the effluent gas treatment unit;
(d) the scrubber solution storage container containing the scrubber solution.

2. The method according to claim 1, wherein the additive is one or more component selected from the group of a nitrification inhibitor, and a stabilizer for a nitrification inhibitor, in particular wherein the stabilizer for a nitrification inhibitor is an acidic organic or inorganic compound.

3. The method according to claim 1 or 2, wherein the particulation unit is selected from the group of fluidized bed granulator, pan granulator, drum granulator, prilling tower, spherodizer, pugmill, and pastillizer.

4. The method according to any one of claims 1 to 3, wherein, according to option a), the additive is added as an aqueous solution or aqueous suspension.

5. The method according to any one of claims 1 to 4, wherein, according to option b), the additive is added as an aqueous suspension.

6. The method according to any one of claims 1 to 5, wherein, according to option c), the additive is added as an aqueous suspension, in particular to the water that is used in the gas treatment unit for treating the effluent gas from the particulation unit comprising ammonia gas to produce a scrubber solution.

7. The method according to any one of claims 1 to 6, wherein, according to option d), the additive is added as an aqueous suspension.

8. The method according to any one of claims 2 to 7, wherein the nitrification inhibitor is selected from the group of dicyandiamide (DCD), 2-chloro-6-trichloromethylpyridine (nitrapyrin), dimethylpyrazole (DMP)-based compounds, such as 3,4-dimethylpyrazole phosphate (DMPP), 3-methylpyrazole (MP), or 3,4-dimethylpyrazole-succinic acid (DMPSA); 1-H-1,2,4-triazole (TZ); 3-methylpyrazole-1-carboxamide (CMP); 4-amino-1,2,4-triazole (AT, ATC); 3-amino-1,2,4-triazole; 2-cyanimino-4-hydroxy-6- methylpyrimidine (CP); 2-ethylpyridine; ammonium thiosulfate (ATS); sodium thiosulfate (ST); thiophosphoryl triamide; thiourea (TU); guanylthiourea (GTU); ammonium polycarboxylate; ethylene urea; hydroquinone; phenylacetylene; phenylphosphoro diamidate; neemcake; calcium carbide; 5-ethoxy-3-trichloromethyl-1,2,4-thiadiazol (etridiazol; terraole); 2-amino-4-chloro-6- methylpyrimidine (AM); 1-mercapto-1,2,4-triazole (MT); 2-mercaptobenzothiazole (MBT); 2-sulfanilamidothiazole (ST); 5-amino-1,2,4-thiadiazole; 2,4-diamino-6-trichloromethyl-s-triazine (CL-1580); N-2,5-dichlorophenyl succinanilic acid (DCS); nitroaniline, chloroaniline, and derivatives and salts thereof, in particular wherein the nitrification inhibitor is a DMP-based compound, more in particular wherein the nitrification inhibitor is a salt of 3,4-dimethyl pyrazole, even more in particular wherein the nitrification inhibitor is 3,4-dimethyl pyrazole phosphate (DMPP).

9. The method according to any one of claims 2 to 8, wherein the nitrification inhibitor, in particular a DMP-based compound, is present in the ammonium-based composition at a level of 0.0001 to 1.0 weight%, in particular 0.02 to 0.5 weight%, more in particular 0.05 to 0.3 weight%, relative to the total weight of the ammonium-based composition.

10. The method according to any one of claims 2 to 9, wherein the acidic organic or inorganic compound is an organic compound comprising a carboxylic group, in particular wherein the acidic organic or inorganic compound is citric acid.

11. The method according to any one of claims 2 to 10, wherein the acidic organic or inorganic compound is present in the homogeneous, solid, particulate ammonium-based composition at a level of 0.0001 to 1.0 weight%, in particular 0.02 to 0.5 weight%, more in particular 0.05 to 0.3 weight%, relative to the total weight of the composition.

12. The method according to any one of claims 1 to 11, wherein the solid, particulate, ammonium-based composition comprises from 40 to 80 weight% of ammonium nitrate.

13. The method according to any one of claims 1 to 11, wherein the solid, particulate, ammonium-based composition comprises from 40 to 80 weight% of ammonium sulphate.

14. The method according to any one of claims 1 to 11, wherein the solid, particulate, ammonium-based composition comprises from 40 to 80 weight% of ammonium phosphate.

15. The method according to any one of claims 1 to 14, wherein the solid, particulate, ammonium-based composition further comprises one or more compounds selected from the group of calcium nitrate, sodium nitrate, calcium bis(dihydrogen- orthophosphate), super phosphate, triple superphosphate, rock phosphate, potassium sulphate, potassium magnesium sulphate, urea, potassium chloride (MOP), potassium phosphate (SOP), urea potassium salts (UK), elemental sulphur, or mixtures thereof.
